# EUROPÄISCHE PATENTSCHRIFT

(11) **EP 0 753 024 B1**
(45) Veröffentlichungstag und Bekanntmachung des Hinweises auf die Patenterteilung: **10.06.1998**
(21) Anmeldenummer: 95913885.0
(22) Anmeldetag: 17.03.1995
(51) Int. Cl.: C08J 9/34, C08J 9/36

(54) **KUNSTSTOFFORMKÖRPER AUS WASSEREXPANDIERTEM ACRYLHARZ**
PLASTIC MOULDING OF WATER-EXPANDED ACRYLIC RESIN
CORPS MOULE PLASTIQUE EN RESINE ACRYLIQUE EXPANSEE A L'EAU

(30) Priorität: 31.03.1994 DE 4411439
(43) Veröffentlichungstag der Anmeldung: 15.01.1997
(73) Patentinhaber: SCHOCK & CO. GMBH, D-73614 Schorndorf (DE)
(72) Erfinder: SCHOCK, Joachim, D-94269 Rinchnach (DE); HIEBER, Gunter, D-73614 Schorndorf (DE)
(74) Vertreter: Hoeger, Stellrecht & Partner
(86) Internationale Anmeldenummer: EP9500997
(87) Internationale Veröffentlichungsnummer: WO9527001

(56) Entgegenhaltungen:
- EP-A- 0 483 982
- EP-A- 0 503 156
- DE-A- 2 147 582
- US-A- 3 958 053

## Beschreibung

Die Erfindung betrifft einen Kunststofformkörper aus wasserexpandiertem Acrylharz mit einer zumindest bereichsweisen, im wesentlichen nichtzellulären Oberflächenschicht, wobei jedoch andere Bereiche des Formkörpers neben der nichtzellulären Oberflächenschicht in ihrer zellulären Struktur im wesentlichen erhalten sind.

Diese Formkörper lassen sich aufgrund ihres geringen spezifischen Gewichtes und ihrer mechanischen Stabilität bei einer Vielzahl von Gegenständen, wie Arbeitsplatten, Türblätter, Verkleidungen etc. verwenden. Dabei ist jedoch die zelluläre Oberflächenstruktur in der Regel zumindest an der Sichtseite nicht erwünscht, weshalb hier eine Oberflächenbearbeitung mit einer Bildung einer nichtzellulären Oberflächenschicht vorgenommen wird.

In der GB-PS 1,360,397 (= DE-2147582 A1) wird empfohlen die Beschichtung oder das Bedrucken des wasserexpandierten Acrylharzformkörpers vorzunehmen, bevor die nichtzelluläre Oberflächenschicht durch Anwendung von Druck und Temperatur gebildet wird.

Allerdings hat sich herausgestellt, daß eine Beschichtung der Kunststofformkörper in dieser Art nur zu unzureichender Verhaftung der Beschichtung auf dem Kunststofformkörper führt. Dieses unbefriedigende Ergebnis wird erhalten, obwohl im Stand der Technik gerade durch die Möglichkeit des Eindringens von Acrylmonomer in die zelluläre Struktur des Kunststofformkörpers zu einer besonders guten Verankerung der Beschichtung auf dem Kunststofformkörper führen soll.

Die Bildung einer nichtzellulären Oberflächenschicht auf einer zellulären Grundstruktur auf Polyacrylbasis ist auch aus der EP-503 156 A 2 bekannt.

Aufgabe der Erfindung ist es, einen Kunststofformkörper der eingangs beschriebenen Art so weiterzubilden, daß dieser mit einer gut haftenden Oberflächenbeschichtung versehen werden kann und welcher sich in der Folge insbesondere für den Einsatz in Tiefziehverfahren eignet.

Diese Aufgabe wird erfindungsgemäß dadurch gelöst, daß die nichtzelluläre Oberflächenschicht einerseits als Diffusionsbarriereschicht für Acrylmonomer ausgebildet und andererseits durch Acrylmonomer mindestens partiell anquellbar ist und daß der Formkörper auf den Oberflächenbereichen, die als Diffusionsbarriereschicht ausgebildet sind, eine Kunststoffbeschichtung mit einer Dicke von 500 µm bis 10 mm trägt.

Erstaunlicherweise zeigt sich, wenn zuerst die nichtzelluläre Oberflächenschicht gebildet wird und diese als Diffusionsbarriereschicht für Acrylatmonomer ausgebildet wird, daß kein Acrylatmonomer durch die nichtzelluläre Oberflächenschicht hindurchdringen und mit der zellulären Struktur in Kontakt treten kann, andererseits jedoch die Diffusionsbarriereschicht durch das Acrylatmonomer mindestens partiell anquellbar ist, daß eine ausgezeichnete Verankerung der Beschichtung auf der nichtzellulären Oberflächenschicht erhalten wird und andererseits die Beschichtung von dem Kunststofformkörper nicht abschälbar ist. Die Stabilität solcher Strukturen entspricht Integralschaumkörpern.

Die nichtzelluläre Diffusionsbarriereschicht sollte eine Mindestdicke von 100 µm aufweisen.

Die nichtzelluläre Diffusionsbarriereschicht kann einerseits durch Verdichtung mit einer zellulären Oberflächenschicht gebildet werden, wobei durch Anwendung und Druck, wie an sich bekannt, zelluläre Struktur bereichsweise und auf eine vorgegebene Dicke zum Kollabieren gebracht wird oder aber durch Aufkaschieren einer Acrylharzfolie auf die zelluläre Oberflächenschicht, wobei nur eine sehr geringe Schicht der zellulären Struktur zum Kollabieren gebracht wird. Die Acrylatfolie, die dabei verwendet wird, hat bevorzugt eine Dicke von 60 bis 250 µm.

Bei der Herstellung der Kunststofformkörper aus wasserexpandiertem Acrylharz lassen sich sowohl ungefüllte Acrylharzsysteme als auch bis zu 75 Gew.% mit anorganischen partikelförmigen Füllstoffen gefüllte Acrylharzsysteme verwenden.

Als partikelförmiger anorganischer Füllstoff werden bevorzugt granulare Füllstoffe und/oder faserförmige Füllstoffe verwendet.

Für viele Anwendungsfälle wird ein Kunststofformkörper bevorzugt, der die Form einer Platte aufweist, welche beidseitig gegebenenfalls sogar allseitig eine nichtzelluläre Diffusionsbarriereschicht aufweist. Letztere Formkörper eignen sich insbesondere zum allseitigen Umgießen mit einer Außenschicht.

Die angesprochene Beschichtung auf einer oder mehreren Oberflächen des Kunststofformkörpers oder gar eine allseitige Beschichtung durch Umgießen wird vorzugsweise auf Acrylharzbasis vorgenommen.

Kunststofformkörper, die tiefgezogen werden sollen, werden bevorzugt mit Vertiefungen im Formkörper hergestellt, weil hier in einfachster Weise lediglich eine stärkere Verdichtung der Oberflächenbereiche vorgenommen werden muß. Die anschließende Kunststoffbeschichtung erhält in diesen zu Vertiefungen verdichteten Oberflächenbereichen eine grössere Schichtdicke, die bei den tiefgezogenen Teilen die besonders stark beanspruchten Bereiche, insbesondere Ecken und dgl. abdecken. Alternativ oder zusätzlich kann bei diesen Bereichen auch eine größere Dicke der ursprünglichen zellulären Struktur vorgesehen werden.

Bevorzugt wird für Kunststofformkörper, die für Tiefziehteile vorgesehen sind, ein Zelldurchmesser bei dem wasserexpandierten Acrylharz in seiner Zellstruktur von ca. 10 µm bis 20 µm im Mittel vorgesehen. Bei der Wahl solcher Zelldurchmesser bleibt eine glänzende Oberflächenschicht der Beschichtung erhalten, d.h. auch nach dem Tiefziehprozeß bildet sich nicht die darunterliegende zelluläre Struktur an der Oberfläche ab.

Wie bereits zuvor erwähnt, eignen sich die erfindungsgemäßen Kunststofformkörper insbesondere für Tiefziehverfahren zur Herstellung von zwei- bis dreidimensional verformten Formkörpern, wobei aber insbesondere von Plattenmaterial ausgegangen wird. Für den Tiefziehprozeß eignet sich insbesondere das Vakuumtiefziehverfahren.

Besonders bevorzugte Beispiele für tiefgezogene Kunststoffformkörper sind Badewannen, Duschtassen, Waschbecken etc., d.h. also insbesondere Formkörper für den Sanitär- und Küchenbereich.

Im folgenden wird die Erfindung anhand von beispielhaften Rezepturen und Verfahrensvorschriften noch näher erläutert, wobei auf zusätzliche Vorteile der Erfindung noch eingegangen wird.

### Acrylhartschaum

### thermoplastischer Schaum ohne Füllstoff

- Dichte:: 100 - 400 g/l, bevorzugt 220 g/l
- Porengröße:: 1 - 100 µm, bevorzugt kleiner 10 µm
- Dicke der Zellwände:: Die Zellwände sind nicht massiv, sondern bestehen ebenfalls aus porigem Material. ungefähre Dicke: 1 µm

### thermoplastischer Schaum mit Füllstoff (mineralische Füllstoffe und Glas bzw. Synthese bzw. Naturfasern)

- Dichte:: 200 - 700 g/l, bevorzugt 450 g/l
- Porengröße:: 1 - 100 µm, bevorzugt kleiner 10 µm
- Dicke der Zellwände:: Die Zellwände sind nicht massiv, sondern bestehen ebenfalls aus porigem Material. ungefähre Dicke: 1 µm

### Verdichtungsvorgang

Erfolgt in einer Presse mit einem Druck von 1 - 15 kg/cm², bevorzugt bei 3 - 6 kg/cm².
- Heizplattentemperatur:: 170 - 250° C, bevorzugt bei 200° C.

Die thermoplastischen Schäume werden in die Presse gelegt. Der Verdichtungsvorgang erfolgt bei einer Zufahrgeschwindigkeit von 0,2 - 10 mm/sec, bevorzugt 1,5 mm/sec.

Der Acrylschaum löst sich in heißem Zustand nicht von der Heizplatte, so daß bevorzugt mit einer Trennschicht gearbeitet wird. In Frage kommen temperaturbeständige Polymerfolien, Papiere mit einem temperaturbeständigen Harz getränkt oder Bleche aus Edelstahl oder einem anderen metallischen Werkstoff.

Die Presse fährt gegen Abstandshalter, die das Zielmaß vorgeben.

Die Platte verbleibt 10 sec bis 3 min, bevorzugt 1 min in der geschlossenen Presse. Dann wird die Integralplatte samt Trennschicht aus der Heizpresse genommen und in einer gekühlten Presse kalibriert. Bei diesem Schritt erfolgt die Maßkalibrierung auf +/- 0,2 mm Maßgenauigkeit. Die Trennschicht oder Trennfolie wird nach dem Abkühlen abgezogen.

Möglich ist auch das Arbeiten in einer Heiz-Kühlpresse. Dabei wird der Acrylschaum thermisch verdichtet und die Presse anschließend abgekühlt. In kaltem Zustand kann der Integralschaum auch ohne Verwendung von Trennfolien leicht von den Preßplatten getrennt werden.

Im folgenden wird der erfindungsgemäße Kunststofformkörper auch als Integralschaumkörper oder kurz Integralplatte bezeichnet.

### Anforderungen an die Integralplatte

Um zu verhindern, daß Acrylmonomere in den Acrylschaum eindringen und die Zellstruktur schädigen, ist eine nichtzelluläre Diffusions-Sperrschicht notwendig. Konsequenzen wären ein mangelhafter Verbund zwischen Integralschaum und Deckschicht sowie ein unzulässig hoher Restmonomerengehalt im fertigen Produkt.

Die Mindestdicke sollte 100 µm betragen, die je nach den gewählten Bedingungen beim Preßvorgang durch thermische Verdichtung von wenigstens 1 mm Acrylschaum erhalten werden kann. Je nach Reaktionszeit und Reaktionstemperatur der polymerisierenden Beschichtungsmasse sind unterschiedliche Dicken der Sperrschicht erforderlich.

Bevorzugt wird eine nichtzelluläre Sperrschicht von 250 µm, die durch Verdichtung von 5 mm Acrylschaum erhalten werden kann.

Die Mitte der Acrylschaumplatte bleibt unverändert. Je nach Verdichtungsgrad beginnt die Verdichtungszone ca. 0,5 - 5 mm, bevorzugt ca. 2 mm, unterhalb der Oberfläche.

Die mechanischen Eigenschaften, wie Biegefestigkeit, können durch den Grad der Verdichtung beeinflußt werden. Je höher die Verdichtung, desto biegefester und biegesteifer ist der Integralschaumformkörper.

Weiterhin wird durch die Verdichtung die Oberfläche so verfestigt, daß ein hoch belastbarer Verbund zwischen der Beschichtung und dem Acrylschaum resultiert.
- Verdichtung:: Ausgangsmaße 15 - 50 mm, bevorzugt 20 mm
Endmaße 8 - 25 mm, bevorzugt 10 mm

### Umguß

Der Integralschaum kann mit einer flüssigen Reaktionsmasse (mit oder ohne faser- und/oder partikelförmige Füllstoffe) basierend auf Acryharzen allseitig umgossen oder einseitig beschichtet werden. Bevorzugt wird die einseitige flächige Beschichtung.
- Füllstoffgehalt:: 0 - 75 Gew.%, bevorzugt ohne Füllstoff.

Die offenporigen Seiten der Integralplatte können mit einer heißen Walze thermisch verdichtet werden. Alternativ dazu kann eine dünne Acrylfolie (Dicke 60 - 250 µm) aufkaschiert werden. Dadurch wird auch an den Seiten der Platte, sofern notwendig, eine Diffusions-Sperrschicht gegen die Acrylmonomeren erhalten.

Zur Erlangung einer höheren Festigkeit und Chemikalienbeständigkeit kann die Acryldeckschicht in geringem Umfang vernetzt werden, wie dies bei handelsüblichen, tiefziehfähigen massiven Acrylplatten üblich ist. Bevorzugt wird mit 0,1 Gew.% Trimethylolpropanitrimethacrylat gearbeitet.

Die Integralplatte wird in eine senkrecht stehende Form eingebracht, die zur Erlangung einer hochglänzenden Oberfläche unter anderem aus einer Glasplatte bestehen kann, und mit der flüssigen Reaktionsmasse befüllt.

Die Reaktionsmasse besteht aus Acrylsirup mit einem Polymergehalt von 10 - 30 Gew.%, bevorzugt 20 Gew.%, einer zwei- oder dreistufigen Peroxidkombination, Stearinsäure als inneres Trennmittel sowie bei Bedarf Pigmenten und/oder flexibilisierenden Komponenten.

Die Polymerisation kann sowohl thermisch als auch chemisch initiiert erfolgen. Bevorzugt wird eine thermische Initiierung.

Um eine Blasenbildung aufgrund der Reaktionsexotherme zu vermeiden, wird die Polymerisation in einem Autoklaven durchgeführt, der mit einem Druck von 2 - 10 bar, bevorzugt 5 bar, beaufschlagt wird. Bei thermisch initiierten Polymerisationen wird der Autoklav mit heißem Wasser von 60 - 120° C, bevorzugt 100° C, befüllt. Durch eine im Autoklaven befindliche Zusatzheizung kann die Temperatur weiter erhöht werden. Die Zeit bis zur Aushärtung der Reaktionsmasse beträgt 15 - 60 min, bevorzugt 30 min.

Bevorzugt wird die Aushärtung der Beschichtung sehr schnell durchgeführt. Besonders schnell kann man ohne Probleme im Autoklaven aushärten. Damit lassen sich besonders gut Schrumpfprobleme beherrschen und beseitigen.

Dicke der Beschichtung: 0,1 - 10 mm, bevorzugt 4 mm. Um einen optimalen Verbund zwischen der Acryldeckschicht und dem Integralschaum zu erhalten, ist es erforderlich, daß die Sperrschicht von den Acrylmonomeren zwar angelöst aber nicht durchdrungen wird.

### Tiefziehen

Würde der Integralschaum mit einer Acryldeckschicht verklebt werden, so würde in der Regel mit vernetzenden Klebern auf Acryl- oder Polyurethanbasis gearbeitet. Aufgrund seiner Vernetzung ist eine thermoplastische Verformbarkeit des Klebers nicht gegeben. Zum Tragen käme der Mechanismus einer thermoelastischen Verformung. Dies kann bei einem hohen Reckungsgrad, wie er beim Tiefziehen erfolgt, zum Riß der Klebefuge oder gar zur Delaminierung führen.

Durch die direkte Beschichtung erhält man dagegen einen homogenen Acryl-/Acrylverbund mit aufeinander abgestimmten Eigenschaften.

Durch die zellulare Struktur kommt es in der ersten Phase des Tiefziehens zu einer Deformation der kugelrunden Poren in eine elliptische Form und anschließend zu einer Reckung des Polymers.

Da im Radienbereich von dreidimensional Formkörpern eine hohe Reckung erfolgt, was zu einer Reduzierung der Wandstärke im Beispiel einer 4 mm dicken Acrylplatte auf bis zu 0,7 mm führt, können diese Bereiche mit einer dickeren Integralschaumschicht versehen werden.

### Beispiel

Die Acrylhartschaumplatte wird beidseitig mit einem Druck von 3 kg/cm² und einer Temperatur von 200° C von einem Ausgangsmaß von 20 mm auf ein Endmaß von 10 mm verpreßt. Die erhaltene Integralplatte hat nun ein durchschnittliches spezifisches Gewicht von 440 g/l mit einem Dichtegradienten durch den Querschnitt.

Die Verdichtungszone beginnt ca 2 mm unterhalb der Oberfläche.

Die äußere nichtzelluläre Sperrschicht hat eine Dicke von 250 µm.

An die Seiten der Integralplatte wird eine Acrylfolie aufkaschiert, um eine Abdichtung gegen Acrylmonomere zu erreichen.

Der Umguß erfolgt mit einem 20%igen Acrylsirup. Als Peroxide für die thermisch initiierte Polymerisation werden 0,2 Gew.% BCHPC und 0,4 Gew.% Dilauroylperoxid verwendet. Die befüllte Form wird in einen Autoklaven eingebracht, der mit 90° C heißem Wasser befüllt und mit einem Druck von 5 bar beaufschlagt wird. Die Aushärtung der Reaktionsmasse ist nach 30 min abgeschlossen.

Ein beispielhafter Acryl/Acryl-Verbund weist eine 4 mm Deckschicht und einen 10 mm Integralschaumformkörper auf.

Herkömmliche tiefgezogene Formkörper aus Acryl, wie z.B. Badewannen, müssen zur Stabilisierung mit einer glasfaserverstärkten Polyesterschicht versehen werden. Dies geschieht in einem offenen, aufgrund hoher Styrolemissionen ökologisch problematischen Prozeß.

Nach dem erfindungsgemäßen Verfahren kann durch Tiefziehen eines Acryl-Integralschaum/Acryldeckschicht-Systems emissionsfrei direkt ein stabiles Formteil erzeugt werden. Hierbei ist der Einsatz von Glasfasern nicht zwingend, was bei der Bearbeitung der Formteile das Problem toxischer Glasfaserstäube beseitigt.

Durch den Acryl/Polyester/Glasfaserverbund handelsüblicher Acrylbadewannen ist das Recycling von Abfällen, Ausschuß und Verschnitt problematisch. Auch hier hat das System eines Acryl/Acryl-Verbunds deutliche Vorteile, da der Abfall in sortenreiner Form anfällt.

## Patentansprüche

1. Kunststofformkörper aus wasserexpandiertem Acrylharz mit einer zumindest bereichsweisen, im wesentlichen nichtzellulären Oberflächenschicht, wobei andere Bereiche des Formkörpers neben der nichtzellulären Oberflächenschicht in ihrer zellulären Struktur im wesentlichen erhalten sind,
**dadurch gekennzeichnet,** daß
die nichtzelluläre Oberflächenschicht einerseits als eine Diffusionsbarriereschicht für Acrylmonomer ausgebildet und andererseits durch Acrylmonomer mindestens partiell anquellbar ist, und daß der Formkörper auf den Oberflächenbereichen, die als Diffusionsbarriereschicht ausgebildet sind, eine Kunststoffbeschichtung mit einer Dicke von 500 µm bis 10 mm trägt.

2. Kunststofformkörper nach Anspruch 1, dadurch gekennzeichnet daß die nichtzelluläre Diffusionsbarriereschicht eine Mindestdicke von 100 µm aufweist.

3. Kunststofformkörper nach Anspruch 1 oder 2, dadurch gekennzeichnet, daß die nichtzelluläre Diffusionsbarriereschicht durch Verdichtung einer zellulären Oberflächenschicht gebildet ist.

4. Kunststofformkörper nach Anspruch 1 oder 2, dadurch gekennzeichnet, daß die nichtzelluläre Diffusionsbarriereschicht durch Aufkaschieren einer Acrylharzfolie auf die zelluläre Oberflächenschicht gebildet ist.

5. Kunststofformkörper nach einem der Ansprüche 1 bis 4, dadurch gekennzeichnet, daß die Acrylharzmasse zur Herstellung des Kunststoffkörper bis zu 75 Gew.% anorganischen partikelförmigen Füllstoff enthält.

6. Kunststofformkörper nach einem der voranstehenden Ansprüche, dadurch gekennzeichnet, daß der Formkörper die Form einer Platte aufweist, welche beidseitig, gegebenenfalls auch allseitig eine nichtzelluläre Diffusionsbarriereschicht aufweist.

7. Kunststofformkörper nacheinander Ansprüche 1 bis 6, dadurch gekennzeichnet, daß der Formkörper zu Vertiefungen verdichtete Oberflächenbereiche umfaßt, wobei die Kunststoffbeschichtungen in diesen Bereichen eine größere Schichtdicke aufweisen.

8. Kunststofformkörper nach einem der voranstehenden Ansprüche, dadurch gekennzeichnet, daß der Zelldurchmesser der Zellen der zellulären Struktur im Mittel ca. 10 µm bis ca. 20 µm betragen kann.

9. Tiefgezogener Kunststofformkörper, hergestellt aus einem Kunststofformkörper nach einem der Ansprüche 1 bis 8.

10. Tiefgezogener Kunststofformkörper nach Anspruch 9, dadurch gekennzeichnet, daß er im Vakuumtiefziehverfahren hergestellt ist.

11. Tiefgezogener Kunststofformkörper nach Anspruch 9 oder 10 in Form einer Badewanne, Duschtasse, Waschbecken oder dgl.

## Claims

1. Plastic shaped article made of water-expanded acrylic resin and having at least area-wise an essentially non-cellular surface layer, with other areas of the shaped article adjacent the non-cellular surface layer essentially retaining their cellular structure,
characterized in that, on the one hand, the non-cellular surface layer is formed as a diffusion barrier layer for acrylic monomer, and, on the other hand, can be made to swell at least partially by acrylic monomer, and in that the shaped article carries a plastic coating having a thickness of from 500 µm to 10 mm on the surface areas which are formed as diffusion barrier layer.

2. Plastic shaped article as defined in claim 1,
characterized in that the non-cellular diffusion barrier layer has a minimum thickness of 100 µm.

3. Plastic shaped article as defined in claim 1 or 2,
characterized in that the non-cellular diffusion barrier layer is formed by compressing a cellular surface layer.

4. Plastic shaped article as defined in claim 1 or 2,
characterized in that the non-cellular diffusion barrier layer is formed by laminating an acrylic resin sheet onto the cellular surface layer.

5. Plastic shaped article as defined in any one of claims 1 to 4, characterized in that the acrylic resin composition for producing the plastic article contains up to 75 % by weight of an inorganic particulate filler.

6. Plastic shaped article as defined in one of the preceding claims, characterized in that the shaped article has the shape of a plate having on both sides thereof, optionally also on all sides thereof, a non-cellular diffusion barrier layer.

7. Plastic shaped article as defined in one of claims 1 to 6, characterized in that the shaped article includes surface areas which are compressed to form recesses, and the plastic coatings have a larger layer thickness in these areas.

8. Plastic shaped article as defined in one of the preceding claims, characterized in that on average the cell diameter of the cells of the cellular structure may be from approximately 10 µm to approximately 20 µm.

9. Deep-drawn plastic shaped article, produced from a plastic shaped article as defined in any one of claims 1 to 8.

10. Deep-drawn plastic shaped article as defined in claim 9, characterized in that it is produced in a vacuum-forming process.

11. Deep-drawn plastic shaped article as defined in claim 9 or 10 in the form of a bathtub, shower trough, washbasin or the like.

## Revendications

1. Corps moulé en matière plastique constitué de résine acrylique expansée à l'eau présentant une couche superficielle essentiellement non cellulaire au moins dans un domaine, d'autres domaines du corps moulé outre la couche superficielle non cellulaire étant essentiellement conservés dans leur structure cellulaire, caractérisé en ce que la couche superficielle non cellulaire est formée d'une part comme une couche de barrière à la diffusion pour un monomère acrylique et peut être d'autre part au moins partiellement traversée par un monomère acrylique, et en ce que le corps moulé porte sur les domaines superficiels, qui sont formés comme une couche de barrière à la diffusion, un revêtement en matière plastique avec une épaisseur de 500 µm à 10 mm.

2. Corps moulé en matière plastique selon la revendication 1, caractérisé en ce que la couche de barrière à la diffusion non cellulaire présente une épaisseur minimale de 100 µm.

3. Corps moulé en matière plastique selon la revendication 1 ou 2, caractérisé en ce que la couche de barrière à la diffusion non cellulaire est formée par compression d'une couche superficielle cellulaire.

4. Corps moulé en matière plastique selon la revendication 1 ou 2, caractérisé en ce que la couche de barrière à la diffusion non cellulaire est formée par stratification d'une feuille de résine acrylique sur la couche superficielle cellulaire.

5. Corps moulé en matière plastique selon l'une quelconque des revendications 1 à 4, caractérisé en ce que la masse de résine acrylique pour la préparation du corps moulé en matière plastique contient jusqu'à 75 % en poids de charge inorganique en forme de particule.

6. Corps moulé en matière plastique selon l'une quelconque des revendications précédentes, caractérisé en ce que le corps moulé présente la forme d'une plaque, laquelle présente sur deux côtés, éventuellement également sur tous les côtés une couche de barrière à la diffusion non cellulaire.

7. Corps moulé en matière plastique selon l'une quelconque des revendications 1 à 6, caractérisé en ce que le corps moulé comprend des domaines superficiels comprimés pour l'emboutissage, les revêtements en matière plastique présentant dans ces domaines une épaisseur de couche plus grande.

8. Corps moulé en matière plastique selon l'une quelconque des revendications précédentes, caractérisé en ce que le diamètre de cellule des cellules de la structure cellulaire peut être en moyenne compris entre environ 10 µm et environ 20 µm.

9. Corps moulé en matière plastique embouti profondément, préparé à partir d'un corps moulé en matière plastique selon l'une quelconque des revendications 1 à 8.

10. Corps moulé en matière plastique embouti profondément selon la revendication 9, caractérisé en ce qu'il est préparé dans un procédé d'emboutissage profond sous vide.

11. Corps moulé en matière plastique embouti profondément selon la revendication 9 ou 10 dans la forme d'une baignoire, d'une cuve de douche, d'un lavabo ou semblables.
